# EUROPEAN PATENT APPLICATION

(11) **EP 4 691 699 A1**
(43) Date of publication of application: **11.02.2026**
(21) Application number: 25191986.6
(22) Date of filing: 25.07.2025
(51) Int. Cl.: B25J 5/00, B25J 9/00, B25J 9/16

(54) **LOGISTIC SYSTEM AND A METHOD THEREOF**

(30) Priority: 06.08.2024 US 202418796112
(71) Applicant: Hand Held Products, Inc., Charlotte, NC 28202 (US)
(72) Inventor: REST, Adam Ming, Charlotte, 28202 (US)
(74) Representative: Haseltine Lake Kempner LLP

(57) **Abstract**

A logistic system and a method are disclosed. The method comprises positioning a base vehicle in proximity to a cargo area or within the cargo area and picking, via a primary arm coupled to a first portion of the base vehicle, at least one object from the cargo area. The primary arm moves in one or more directions. The method comprises receiving, via a secondary arm coupled to a second portion of the base vehicle, the at least one object from the primary arm. The method comprises transporting, via the secondary arm, the at least one object to a conveyor line positioned at a third portion of the base vehicle. The secondary arm comprises a plurality of linkages that are collectively configured to move in the directions for receiving the at least one object from the primary arm and transporting the at least one object to the conveyor line.

## Description

### TECHNOLOGICAL FIELD

Example embodiments of the present disclosure relate generally to a throughput system, and more particularly relates to a logistic system and a method thereof.

### BACKGROUND

There are certain throughput limitations in tows used behind conveyor container and truck trailer loading and unloading applications. Current systems use a 6+ degree of freedom robotic arm manipulator to both pick to and from the conveyor and product wall. The tow behind conveyor configuration opposed to a side conveyor is necessary to minimize vehicle clearance to the side walls to allow for a robot arm to reach. The tow behind configuration; however, necessitates an 180 degree rotation about the robot arm base from the pick to place positions. This is costly to throughput as the robot arm is relatively heavy and slow to accelerate and decelerate.

The inventors have identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY

The following presents a simplified summary in order to provide a basic understanding of some aspects of the present disclosure. This summary is not an extensive overview and is intended to neither identify key or critical elements nor delineate the scope of such elements. Its purpose is to present some concepts of the described features in a simplified form as a prelude to the more detailed description that is presented later.

In one example embodiment, a method is disclosed. The method comprising steps of positioning a base vehicle in proximity to a cargo area or within the cargo area. The method further comprises steps of picking, via a primary arm coupled to a first portion of the base vehicle, at least one object from the cargo area. Further, the primary arm is configured to move in one or more directions. The method further comprises steps of receiving, via a secondary arm coupled to a second portion of the base vehicle, the at least one object from the primary arm. Thereafter, transporting, via the secondary arm, the at least one object received from the primary arm to a conveyor line positioned at a third portion of the base vehicle. Thereafter, the secondary arm comprises plurality of linkages that are collectively configured to move in one or more directions for receiving the at least one object from the primary arm and transporting the at least one object to the conveyor line.

In some embodiments, the base vehicle is further integrated with a plurality of wheels. Further, the plurality of wheels are configured to allow mobility of the base vehicle in one or more directions within the cargo area.

In some embodiments, the secondary arm is positioned with respect to the primary arm such that the primary arm is configured to deliver the at least one object to the secondary arm by moving in the one or more directions.

In some embodiments, the primary arm has a first end and a second end. In some embodiments, the first end is integrated with a suction unit and the second end is coupled with the first portion of the base vehicle. In some embodiments, the suction unit is configured to allow the primary arm to grip onto the at least one object and place onto the secondary arm. In some embodiments, the second portion of the base vehicle comprises a platform, and wherein the secondary arm is coupled to the platform.

In some embodiments, the plurality of linkages collectively define a first end and a second end, the secondary arm comprises a claw unit, and the first end is coupled with the claw unit and the second end is coupled to a top surface of the platform.

In some embodiments, the method further comprises steps of moving, via the plurality of linkages, the claw unit from the primary arm at the first portion of the base vehicle to the third portion of the base vehicle for transporting the at least one object from the primary arm to the conveyor line.

In some embodiments, the first portion corresponds to a front portion of the base vehicle, the second portion corresponds to a middle portion of the base vehicle, and the third portion corresponds to a rear portion of the base vehicle. In some embodiments, the middle portion of the base vehicle is at a predefined height relative to the front portion of the base vehicle and the middle portion of the base vehicle is in the same plane with the rear portion of the base vehicle.

In another example embodiment, a logistic system is disclosed. The logistic system comprising a base vehicle, a primary arm coupled to a first portion of the base vehicle. Further, the primary arm is configured to pick at least one object from a cargo area. Further, the primary arm is configured to move in one or more directions, a secondary arm coupled to a second portion of the base vehicle, and a conveyor line coupled to a third portion of the base vehicle. Further, the secondary arm is configured to receive the at least one object from the primary arm and further transport the at least one object received from the primary arm to the conveyor line. Further, the secondary arm comprises plurality of linkages that are collectively configured to move in one or more directions for receiving the at least one object from the primary arm and transporting the at least one object to the conveyor line.

The above summary is provided merely for purposes of summarizing some example embodiments to provide a basic understanding of some aspects of the invention. Accordingly, it will be appreciated that the above-described embodiments are merely examples and should not be construed to narrow the scope or spirit of the invention in any way. It will be appreciated that the scope of the invention encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1A illustrates an isometric view of a logistic system in accordance with an example embodiment of the present disclosure;
FIG. 1B illustrates a bottom view of the logistic system in accordance with an example embodiment of the present disclosure;
FIG. 2A illustrates an isometric view of the logistic system in accordance with an example embodiment of the present disclosure;
FIG. 2B illustrates a top view of the logistic system in accordance with an example embodiment of the present disclosure;
FIG. 3 illustrates a perspective view of a secondary arm of the logistic system in accordance with an example embodiment of the present disclosure;
FIGS. 4A-4D illustrate a stepwise movement of the secondary arm with respect to a primary arm from a first portion of a base vehicle to a third portion of the base vehicle in accordance with an example embodiment of the present disclosure;
FIG. 5 illustrates an exemplary scenario of the logistic system placing the at least object over the conveyor line in accordance with an example embodiment of the present disclosure; and
FIG. 6 illustrates a flowchart of a method of the logistic system in accordance with an example embodiment of the present disclosure.

### DETAILED DESCRIPTION

Some embodiments will now be described more fully hereinafter with reference to the accompanying drawings, in which some, but not all, embodiments are shown. Indeed, various embodiments may be embodied in many different forms and should not be construed as limited to the embodiments set forth herein; rather, these embodiments are provided so that this disclosure will satisfy applicable legal requirements. As discussed herein, the protection devices may be referred to use by humans, but may also be used to raise and lower objects unless otherwise noted.

The components illustrated in the figures represent components that may or may not be present in various embodiments of the invention described herein such that embodiments may include fewer or more components than those shown in the figures while not departing from the scope of the invention. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a method to throughput objects and a logistic system thereof. Embodiments may comprise a base vehicle. Embodiments may comprise a primary arm that may be coupled to a first portion of the base vehicle. Embodiments may be configured to pick at least one object from a cargo area. Embodiments may be configured to move in one or more directions. Embodiments may comprise a secondary arm that may be coupled to a second portion of the base vehicle. Embodiments may comprise a conveyor line that may be coupled to a third portion of the base vehicle. Embodiments may be configured to receive the at least one object from the primary arm and further transport the at least one object received from the primary arm to the conveyor line. Embodiments may comprise plurality of linkages that may be collectively configured to move in one or more directions for receiving the at least one object from the primary arm and transporting the at least one object to the conveyor line.

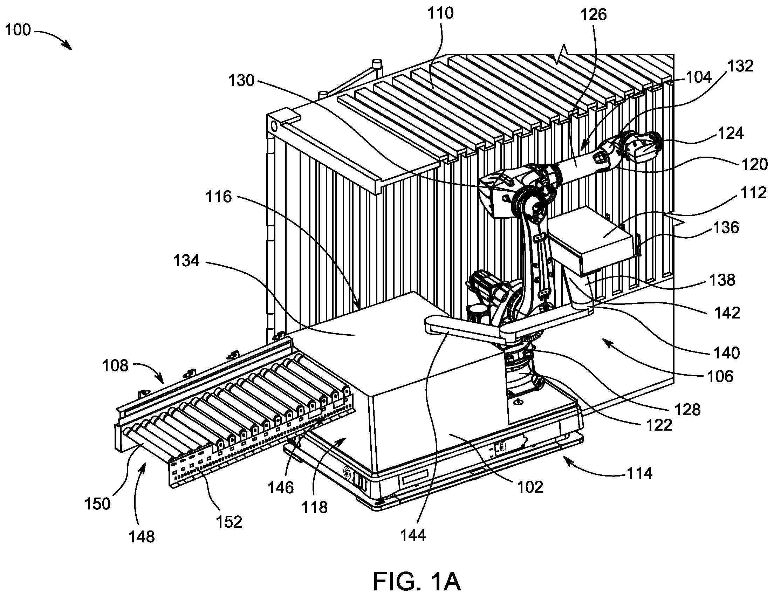

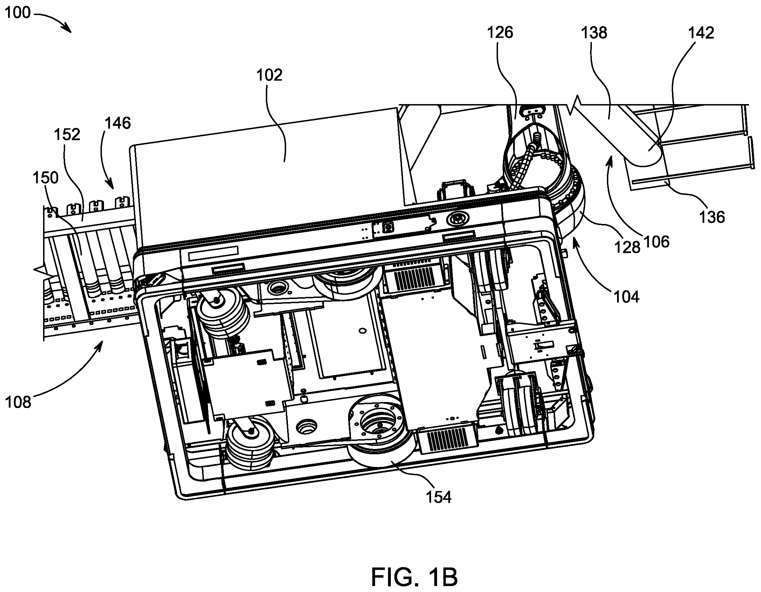

FIG. 1A illustrates an isometric view of a logistic system 100, in accordance with an example embodiment of the present disclosure. FIG. 1B illustrates a bottom view of the logistic system 100, in accordance with an example embodiment of the present disclosure.

In some embodiments, the logistic system 100 may comprise a base vehicle 102, a primary arm 104, and a secondary arm 106. Further, the logistic system 100 may comprise a conveyor line 108.

In some embodiments, the base vehicle 102 may be configured to be positioned within a cargo area 110. Further, the cargo area 110 may comprise at least one of a cargo container, rack, inventory, etc. In some embodiments, the cargo area 110 may be configured to store a plurality of objects. In one example, each of the plurality of objects may correspond to a carton, a wooden box, machineries of a predefined size, etc. In some embodiments, the cargo area 110 may comprise at least one opening. Further, the at least one opening may enable entrance of the base vehicle 102 inside the cargo area 110. In some embodiments, the cargo area 110 may be configured to store the plurality of objects in a form of a stack, array, or pile.

In some embodiments, the base vehicle 102 may be configured to enter into the cargo area 110 through the at least one opening. Further, the base vehicle 102 may be configured to move inside the cargo area 110. In some embodiments, the base vehicle 102 may be configured to move in a transverse plane and a longitudinal plane within the cargo area 110 to reach towards the plurality of objects. In some embodiments, the base vehicle 102 may comprise a plurality of wheels 154. Further, each of the plurality of wheels 154 may be configured to allow mobility of the base vehicle 102 in one or more directions within the cargo area 110. In some embodiments, each of the plurality of wheels 154 may be coupled with a motor (e.g., a direct current (DC) electric motor, an alternate current (AC) electric motor, and a servo motor) In some embodiments, the base vehicle 102 may comprise a housing structure. Further, the housing structure of the base vehicle 102 may be configured to accommodate one or more electronic components (e.g., motor drivers, sensors, aligners, and etc.) and one or more electrical components (e.g., electrical wires, switches, button, etc.) associated with the base vehicle 102. In one example, the base vehicle 102 may be positioned at a dock area of a facility such as factory outlet, loading space, etc.

In one example, the base vehicle 102 may be externally controlled by an operator. Further, the base vehicle 102 may be installed with a plurality of physical buttons. Further, the plurality of physical buttons may be accessed by the operator to control movement of the base vehicle 102 within the cargo area 110. In another example, the base vehicle 102 may be controlled by the operator using a controller communicatively coupled with the base vehicle 102 from a remote location. In another example, the base vehicle 102 may be programmed such that the base vehicle 102 moves at one or more pre-defined paths.

In some embodiments, the base vehicle 102 may comprise a first portion 114, a second portion 116, and a third portion 118. In some embodiments, the first portion 114 of the base vehicle 102 and the second portion 116 of the base vehicle 102 may form a stepped structure. In one example, the first portion 114 of the base vehicle 102 may be positioned at a lower height as compared to the second portion 116 of the base vehicle 102 (as illustrated in FIG. 1A). In some embodiments, the first portion 114 of the base vehicle 102 may correspond to a front portion of the base vehicle 102. In some embodiments, the first portion 114 and the second portion 115 of the base vehicle 102 may extend horizontally. In some embodiments, the second portion 116 of the base vehicle 102 may correspond to a middle portion of the base vehicle 102. In some embodiments, the third portion 118 of the base vehicle 102 may correspond to a rear portion of the base vehicle 102. In some embodiments, the third portion 118 of the base vehicle 102 may extend vertically.

In some embodiments, the middle portion of the base vehicle 102 may be at a predefined height relative to the front portion of the base vehicle 102. Further, the middle portion of the base vehicle 102 may be in the same plane with the rear portion of the base vehicle 102. In some embodiments, the first portion 114 of the base vehicle 102 may be coupled with the primary arm 104. In some embodiments, the second portion 116 of the base vehicle 102 may be coupled with the secondary arm 106. In some embodiments, upon reaching in proximate to the plurality of objects, the primary arm 104 may be configured to move towards the plurality of objects stored within the cargo area 110. Further, the primary arm 104 may be configured to pick at least one object 112 of the plurality of objects from the cargo area 110.

In some embodiments, the primary arm 104 may be configured to move in one or more directions. In some embodiments, the one or more directions may correspond to a horizontal direction (i.e., a transverse direction and/or a longitudinal direction) and a vertical direction. In some embodiments, the one or more joints may be configured to provide movement to the primary arm 104 in the one or more directions to reach towards the at least one object 112 of the plurality of objects. In some embodiments, the primary arm 104 may comprise a first end 120 and a second end 122. In some embodiments, the first end 120 of the primary arm 104 may be integrated with a suction unit 124 (as illustrated in FIG. 1A). In some embodiments, the second end 122 of the primary arm 104 may be coupled with the first portion 114 of the base vehicle 102. Further, the suction unit 124 may be configured to allow the primary arm 104 to grip onto the at least one object 112.

In some embodiments, the primary arm 104 may comprise one or more joints, and one or more linkages. In some embodiments, the one or more joints may comprise a base joint 128, a shoulder joint 130, and an elbow joint 132. In some embodiments, the base joint 128 may be installed with the first portion 114 of the base vehicle 102. In some embodiments, the base joint 128 may be configured to facilitate movement of the primary arm 104 in the transverse direction within the cargo area 110. In some embodiments, the shoulder joint 130 may be configured to facilitate movement of the primary arm 104 in the longitudinal direction within the cargo area 110. In some embodiments, the elbow joint 132 may be configured to facilitate movement of the primary arm 104 in the vertical direction within the cargo area 110.

In some embodiments, the primary arm 104 may be configured to facilitate placement of the suction unit 124 over the at least one object 112 from the plurality of objects. In some embodiments, the suction unit 124 may be configured to grip the at least one object 112 from the plurality of objects to be unloaded from the cargo area 110. In some embodiments, the suction unit 124 may be configured to grip the at least one object 112 through a vacuum pressure. In some embodiments, upon gripping of the at least object, the one or more joints may be configured to provide movement to the primary arm 104 to move the at least one object 112 towards the secondary arm 106. It may be noted that range of movement of the primary arm 104 within the cargo area 110 may depend upon the size of the cargo area 110, size of the primary arm 104, and positioning of the at least one object 112 inside the cargo area 110.

In some embodiments, the secondary arm 106 may be coupled with the second portion 116 of the base vehicle 102. Further, the secondary arm 106 may be positioned with respect to the primary arm 104. Further, the positioning of the primary arm 104 may facilitate delivery of the at least one object 112 to the secondary arm 106 by moving in the one or more directions. in some embodiments, the second portion 116 of the base vehicle 102 may comprise a platform 134. Further, the secondary arm 106 may be coupled to the platform 134 of the base vehicle 102. In some embodiments, the secondary arm 106 may be configured to receive the at least one object 112 from the primary arm 104. Further, the secondary arm 106 may comprise a claw unit 136, a plurality of linkages 138, such two, three, four, or five linkages 138, and a plurality of parallel-axis joints 140. In some embodiments, the plurality of linkages 138 may collectively define a first end 142 and a second end 144. Further, the first end 142 may be coupled with the claw unit 136 and the second end 144 may be coupled with a top surface of the platform 134.

In some embodiments, the claw unit 136 of the secondary arm 106 may be configured to receive the at least one object 112 of the plurality of objects from the primary arm 104. In some embodiments, the claw unit 136 of the secondary arm 106 may be configured to accommodate the at least one object 112. In some embodiments, at least one link of the plurality of linkages 138 may be coupled with the second portion 116 of the base vehicle 102. In some embodiments, the secondary arm 106 may be configured to transport the at least one object 112 received from the primary arm 104 to the conveyor line 108. In some embodiments, the plurality of linkages 138 may be configured to provide movement to the secondary arm 106 in one or more directions from receiving the at least one object 112 from the primary arm 104 and transporting the at least one object 112 to the conveyor line 108. In some embodiments, the one or more directions may correspond to one or more direction in a horizontal plane.

In some embodiments, it may be beneficial that the primary arm 104 only moves in a limited manner to deliver the at least one object 112 from the cargo area 110 to the secondary arm 106. In some embodiments, the logistic system 100 is configured such that it is only necessary for the primary arm 104 to rotate in a predefined angle. The primary arm 104 may be configured to move over a vertical plane and extend through the center C of the base vehicle 102. Further, the secondary arm 106 may be configured to rotate only horizontally to receive the at least one object 112 and take the at least one object 112 towards the conveyor line 108. The limited movement of the primary arm 104 may increase the throughput of the logistic system 100 because the speed of rotation of the primary arm 104 may be limited and relatively slow.

In some embodiments, the conveyor line 108 may be coupled with the third portion 118 of the base vehicle 102. In some embodiments, the conveyor line 108 may comprise a first end 146, a second end 148, a plurality of idler rollers 150, and a pair of longitudinal side rails 152. In some embodiments, the claw unit 136 may be configured to place the at least one object 112 over the first end 146 of the conveyor line 108. In some embodiments, the first end 146 may correspond to a source end. In some embodiments, the plurality of idler rollers 150 may be configured to move the at least one object 112 from the first end 146 to the second end 148 of the conveyor line 108. In some embodiments, each of the plurality of idler rollers 150 may define a rotational axis. Further, each of the plurality of idler rollers 150 may be configured to rotate over the rotational axis. In some embodiments, the pair of longitudinal side rails 152 may be configured to prevent falling of the at least one object 112 from the conveyor line 108 during movement of the at least one object 112 over the conveyor line 108.

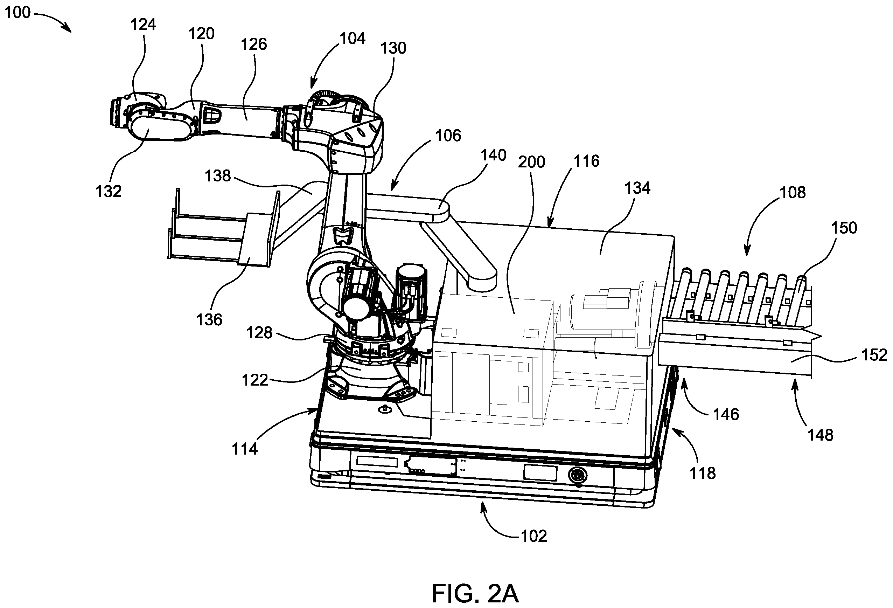

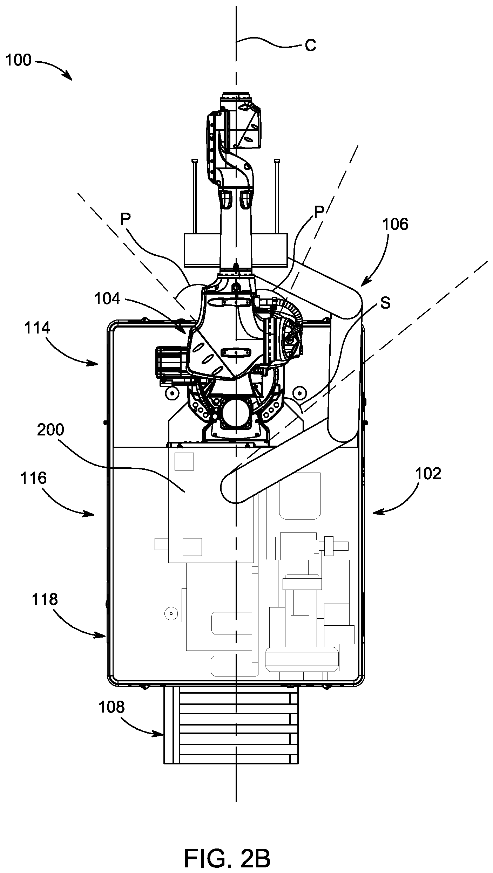

FIG. 2A illustrates an isometric view of the logistic system 100, in accordance with an example embodiment of the present disclosure. FIG. 2B illustrates a top view of the logistic system 100, in accordance with an example embodiment of the present disclosure.

In some embodiments, the primary arm 104 may comprise the one or more joints. In some embodiments, the one or more joints may comprise the base joint 128, the shoulder joint 130, and the elbow joint 132. In some embodiments, each of the one or more joints may be coupled with at least one motor (e.g., direct current (DC) electric motor, alternating current (AC) electric motor, or servo motor). In some embodiments, the base joint 128 from the one or more joints may be coupled with the second portion 116 of the base vehicle 102. In some embodiments, a height of the first portion 114 of the base vehicle 102 may be selected such that the suction unit 124 may easily reach in proximity to each of the plurality of objects. In some embodiments, the base vehicle 102 may comprise a vacuum generator 200. In some embodiments, the suction unit 124 of the primary arm 104 may be coupled with the vacuum generator 200. Further, the vacuum generator 200 may be configured to generate the vacuum pressure. Further, the suction unit 124 may be configured to grip the at least one object 112 through the vacuum pressure generated by the vacuum generator 200.

As illustrated in FIG. 2B, the primary arm 104 may be configured in the transverse direction. In one example, when the primary arm 104 may pick the at least one object 112 from the cargo area 110, the primary arm 104 may be configured to move over a vertical plane that may extend through a center C of the base vehicle 102. In some embodiments, when the secondary arm 106 may receive the at least one object 112 from the primary arm 104, both the primary arm 104 and the secondary arm 106 may be positioned within a vertical plane that may extend through the center of the base vehicle 102.In some embodiments, upon gripping the at least one object 112, the primary arm 104 may be configured to position the suction unit 124 along with the at least one object 112 over the claw unit 136 of the secondary arm 106. Further, the suction unit 124 of the primary arm 104 may be configured to release the vacuum pressure to place the at least one object 112 over the claw unit 136 of the secondary arm 106.. Further, height of the second portion 116 of the base vehicle 102 may be selected such that the claw unit 136 of the secondary arm 106 may easily reach in proximity to the conveyor line 108. Further, the secondary arm 106 along with the claw unit 136 may be configured to parse the at least one object 112 from the claw unit 136 to the conveyor line 108. It may be noted that height of the secondary arm 106 may be dependent on the primary arm 104 workspace, maximum and average product handled, and vehicle geometry.

In some embodiments, the conveyor line 108 may comprise the plurality of idler rollers 150. In one example, one or more idler rollers 150 from the plurality of idler rollers 150 may be operationally coupled with at least one motor. Further, the at least one motor may be configured to provide movement to the one or more idler rollers 150 to rotate on the rotating axis. In another example, each idler roller from the plurality of idler rollers 150 may be operationally coupled with the at least one motor. Further, the at least one motor may be configured to provide movement to each idler roller from the plurality of idler rollers 150 to rotate on the rotating axis. In some embodiments, the at least one motor may correspond to at least one of a servo motor, a DC electric motor, an AC electric motor, etc.

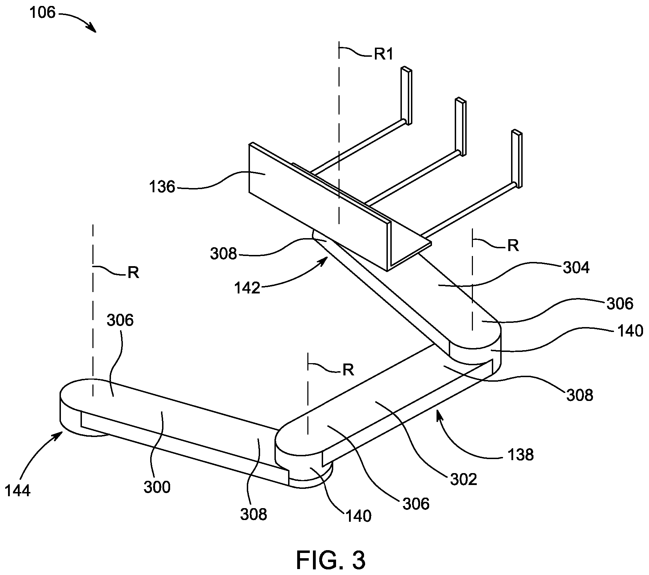

FIG. 3 illustrates a perspective view of the secondary arm 106 of the logistic system 100, in accordance with an example embodiment of the present disclosure. FIG. 3 is described in conjunction with FIG. 1A-2.

In some embodiments, the secondary arm 106 may be coupled with the second portion 116 of the base vehicle 102. In some embodiments, the secondary arm 106 may comprise the plurality of linkages 138 and the plurality of parallel-axis joints 140. In some embodiments, each of the plurality of parallel-axis joints 140 may be configured to move horizontally and remain rigid in the vertical direction. In some embodiments, each linkage from the plurality of linkages 138 may be constructed with a shape that may include but not limited to a rectangle, cylinder, etc. In some embodiments, each linkage from the plurality of linkages 138 may be composed of a material that may include but not limited to a steel, aluminum, iron, etc. In some embodiments, each linkage from the plurality of linkages 138 may define a linkage rotating axis R (as illustrated in FIG. 3). Further, each linkage from the plurality of linkages 138 may be configured to rotate on its respective linkage rotating axis R. In some embodiments, the plurality of linkages 138 may be configured to move independently to provide an orthogonal movement to the claw unit 136 of the secondary arm 106.

In one example, when the secondary arm 106 comprises at least three linkages, the at least three linkages may comprise a first linkage 300, a second linkage 302 and a third linkage 304 (as illustrated in FIG. 3). In some embodiments, each linkage from the at least three linkages may comprise a first section 306 and a second section 308. In some embodiments, the first section 306 of the first linkage 300 may be coupled with the second portion 116 of the base vehicle 102. Further, at least one parallel-axis joint may be coupled between the first section 306 of the first linkage 300 and the second portion 116 of the base vehicle 102 for providing movement to the first linkage 300 to rotate on the linkage rotating axis R (as illustrated in FIG. 3).

In some embodiments, the second section 308 of the first linkage 300 may be coupled with a first section 306 of the second linkage 302. Further, another parallel-axis joint may be coupled between the second section 308 of the first linkage 300 and the first section 306 of the second linkage 302 for providing movement to the second linkage 302 to rotate on the linkage rotating axis R. In some embodiments, the second section 308 of the second linkage 302 may be coupled with a first section 306 of the third linkage 304. Further, another parallel-axis joint may be coupled between the second section 308 of the second linkage 302 and the first section 306 of the third linkage 304 for providing movement to the third linkage 304 to rotate on the linkage rotating axis R.

In some embodiments, the second section 308 of the third linkage 304 may be coupled with the claw unit 136. Further, another parallel-axis joint may be coupled between the second section 308 of the third linkage 304 and the claw unit 136 for providing movement to the claw unit 136 on a claw unit rotating axis R1. Further. the another parallel-axis joint may be configured to move the claw unit 136 in a clockwise or anti-clockwise direction. In some embodiments, each of the parallel-axis joints 140 may be configured to provide an angular motion to each of the at least three linkages and the claw unit 136 of the secondary arm 106 while receiving the at least one object 112 from the primary arm 104 and transporting the at least one object 112 to the conveyor line 108.

In some embodiments, the claw unit 136 may be configured to receive the at least one object 112. In some embodiments, the claw unit 136 may comprise a plurality of tines, and a sheet metal piece. Further, the plurality of tines and the sheet metal piece may be configured to accommodate the at least one object 112. In some embodiments, the plurality of tines may be composed of a material that may include but not limited to steel, aluminum, iron, etc. In some embodiments, the plurality of tines and the sheet metal piece may be composed of a shape that may ensure a proper accommodation of the at least one object 112 on the claw unit 136.

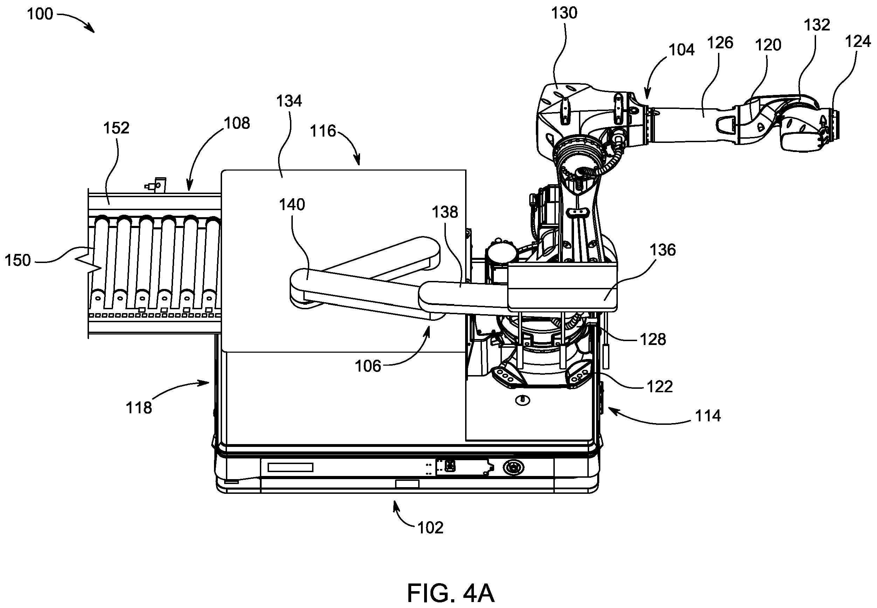

FIGS. 4A-4D illustrate a stepwise movement of the secondary arm 106 with respect to the primary arm 104 from the first portion 114 of the base vehicle 102 to the third portion 118 of the base vehicle 102, in accordance with an example embodiment of the present disclosure.

In some embodiments, the primary arm 104 may be configured to move laterally within a range of -6 degrees to +6 degrees. In some embodiments, the base joint 128 of the primary arm 104 may be configured to provide movement to the primary arm 104 in the first plane. Further, the primary arm 104 may be configured to move vertically within a range of 0 degree to +90 degrees. Further, the shoulder joint 130 of the primary arm 104 may be configured to provide movement to the primary arm 104 in the second plane. In some embodiments, the primary arm 104 may be configured to move longitudinally within a range of 0 degrees to -90 degrees. In some embodiments, the elbow joint 132 may be configured to provide movement to the primary arm 104 in the third plane. It may be noted that range of motion of the primary arm 104 may be optimized as per the user's requirements.

In some embodiments, the primary arm 104 may be configured to pick the at least one object 112 from the cargo area 110 through the suction unit 124 and place the at least one object 112 on the claw unit 136 of the secondary arm 106. In some embodiments, the secondary arm 106 may be configured to place the claw unit 136 in close proximate to the primary arm 104. In some embodiments, upon placement of the at least one object 112 on the claw unit 136, the first linkage 300 of the secondary arm 106 may be configured to rotate in a clockwise direction to provide movement to the claw unit 136 towards the base vehicle 102 through the at least one parallel-axis joint (as illustrated in FIG. 4A).

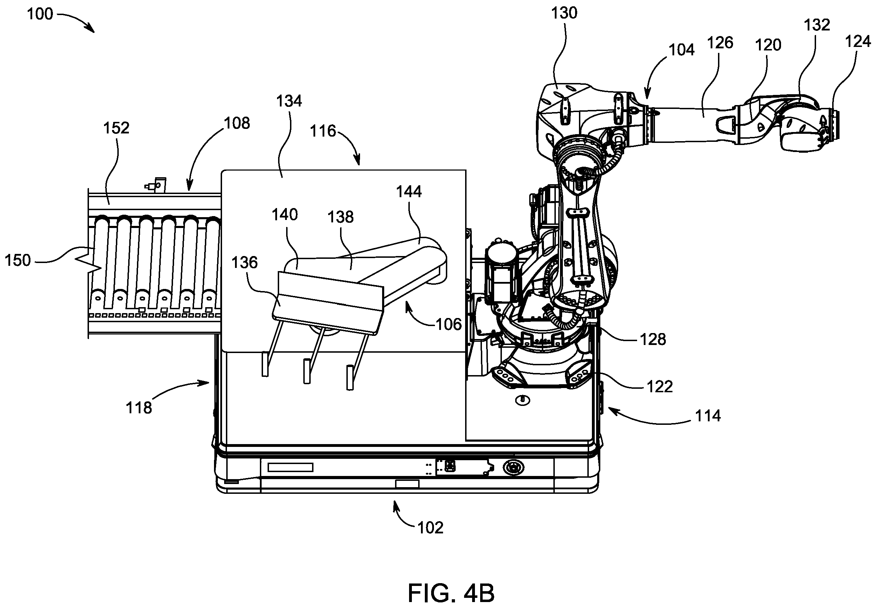

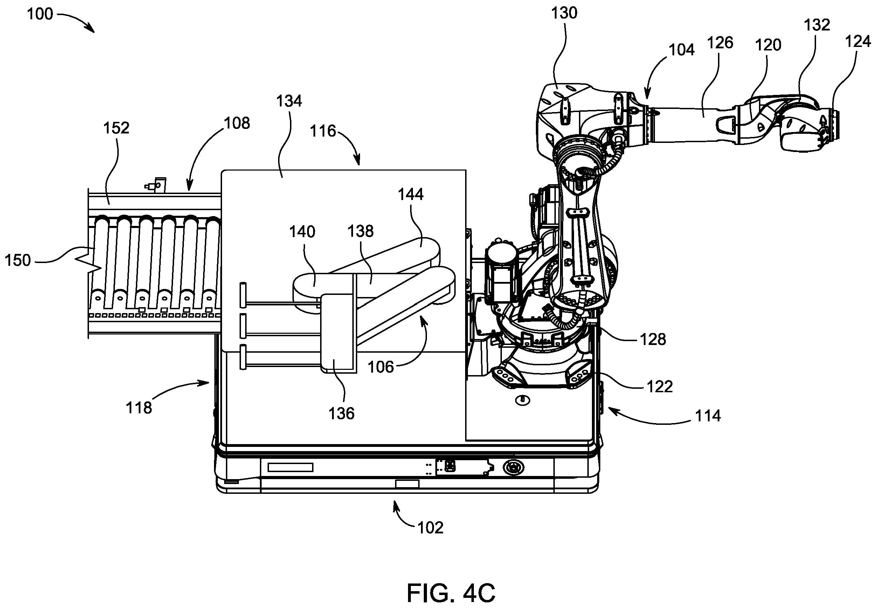

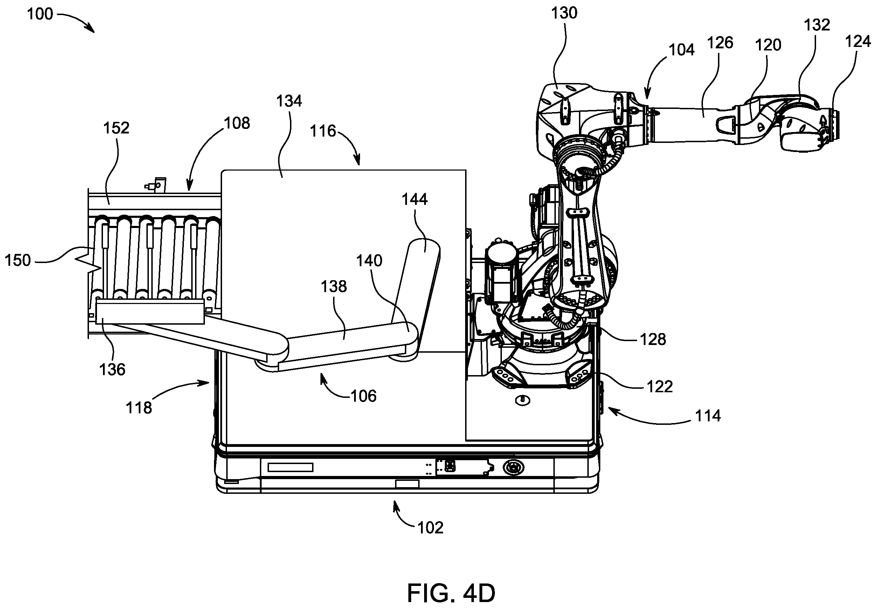

In some embodiments, upon positioning of the claw unit 136 in proximity to the base vehicle 102, the third linkage 304 of the secondary arm 106 may be configured to rotate in a clockwise direction to provide movement to the claw unit 136 towards the conveyor line 108 through the another parallel-axis joint (as illustrated in FIG. 4B). In some embodiments, upon movement of the third linkage 304 of the secondary arm 106, the claw unit 136 may be configured to rotate in a clockwise direction towards the base vehicle 102 through another parallel axis joint coupled between the second section 308 of the third linkage 304 and the claw unit 136 (as illustrated in FIG. 4C). In some embodiments, during movement of the claw unit 136 towards the base vehicle 102, the second linkage 302 of the secondary arm 106 may be configured to rotate in the clockwise direction to position the claw unit 136 in proximity to the first end 146 of the conveyor line 108 through the another parallel-axis joint (as illustrated in FIG. 4D).

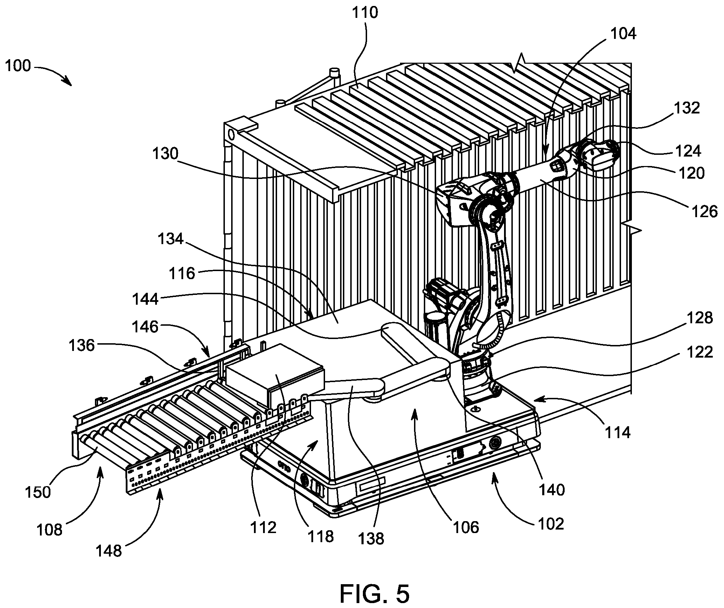

FIG. 5 illustrates an exemplary scenario of the logistic system 100 placing the at least object over the conveyor line 108, in accordance with an example embodiment of the present disclosure.

In some embodiments, the conveyor line 108 may be coupled with the third portion 118 of the base vehicle 102. In some embodiments, the conveyor line 108 may be coplanar with the third portion 118 of the base vehicle 102. In some embodiments, the conveyor line 108 may comprise the first end 146 (i.e., the source end). In some embodiments, upon movement of the second linkage 302 of the secondary arm 106, the claw unit 136 of the secondary arm 106 may be configured to place the at least one object 112 over the first end 146 of the conveyor line 108. In some embodiments, the plurality of idler rollers 150 of the conveyor line 108 may be configured to move the at least one object 112 from the first end 146 to the second end 148 (i.e., destination end) of the conveyor line 108. Further, each of the plurality of idler rollers 150 may be configured to rotate over the rotational axis. In some embodiments, each idler roller from the plurality of idler rollers 150 may be interconnected between the pair of longitudinal side rails 152. In some embodiments, the pair of longitudinal side rails 152 may be configured to prevent falling of the at least one object 112 from the conveyor line 108 during movement of the at least one object 112 from the first end 146 to the second end 148 over the conveyor line 108.

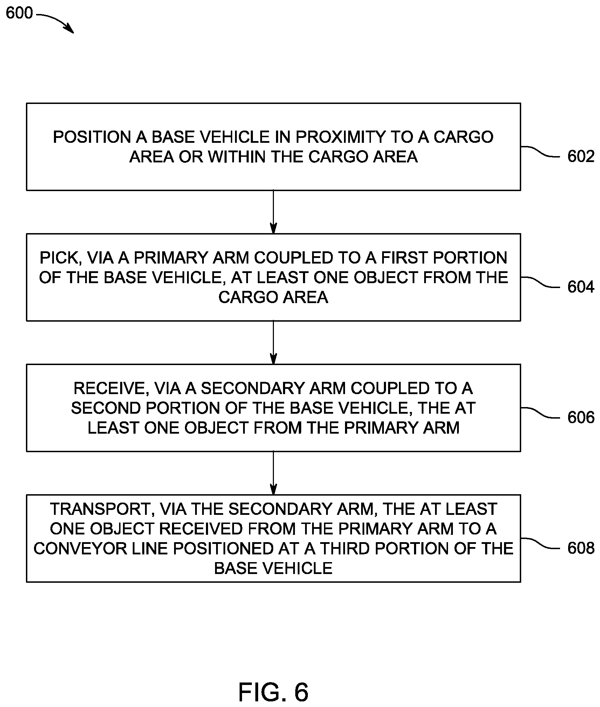

FIG. 6 illustrates a flowchart of a method 600 of the logistic system 100, in accordance with an example embodiment of the present disclosure.

At operation 602, the base vehicle 102 may be configured to positioned in proximity to the cargo area 110 or within the cargo area 110. In some embodiments, the cargo area 110 may be configured to store the plurality of objects. In some embodiments, the cargo area 110 may comprise the at least one opening. Further, the at least one opening may enable entrance of the base vehicle 102 inside the cargo area 110. In some embodiments, the base vehicle 102 may be integrated with the plurality of wheels 154. Further, each of the plurality of wheels 154 may be configured to allow mobility of the base vehicle 102 in the one or more directions within the cargo area 110.

For example, a base vehicle 102 is placed in proximity to a cargo container. Further, the cargo container is configured to store a plurality of objects. Further, the base vehicle 102 is integrated with a plurality of wheels 154. Further, the base vehicle 102 is configured to move within the cargo container and in proximity to the plurality of objects.

At operation 604, the primary arm 104 may be coupled to the first portion 114 of the base vehicle 102. Further, the primary arm 104 may be configured to pick the at least one object 112 from the cargo area 110. Further, the primary arm 104 may be configured to move in the one or more directions. in some embodiments, the base vehicle 102 may comprise the first portion 114, the second portion 116, and the third portion 118. In some embodiments, the first portion 114 of the base vehicle 102 and the second portion 116 of the base vehicle 102 may form the stepped structure. In some embodiments, upon reaching in proximate to the plurality of objects, the primary arm 104 may be configured to move in the one or more directions to move towards the plurality of objects stored within the cargo area 110. Further, the primary arm 104 may be configured to pick at least one object 112 of the plurality of objects from the cargo area 110.

For example, the base vehicle 102 comprises a first portion 114, a second portion 116 and a third portion 118. Further, the first portion 114 of the base vehicle 102 is installed with a primary arm 104. Further, the primary arm 104 may be configured to pick at least one object 112 from the plurality of objects. Further, the base vehicle 102 is configured to move in one or more direction (i.e., longitudinal direction, and transverse direction).

At operation 606, the secondary arm 106 may be coupled to the second portion 116 of the base vehicle 102. Further, the secondary arm 106 may be configured to receive the at least one object 112 from the primary arm 104. Further, the secondary arm 106 may comprise the claw unit 136. Further, the claw unit 136 of the secondary arm 106 may be configured to receive the at least one object 112 of the plurality of objects from the primary arm 104. In some embodiments, the claw unit 136 of the secondary arm 106 may be configured to accommodate the at least one object 112.

For example, the second portion 116 of the base vehicle 102 is installed with a secondary arm 106. Further, the secondary arm 106 comprises a claw unit 136 having a plurality of tines. Further, the claw unit 136 is configured to accommodate the at least one object 112 placed by the primary arm 104.

At operation 608, the secondary arm 106 may be configured to transport the at least one object 112 received from the primary arm 104 to the conveyor line 108 may be positioned at the third portion 118 of the base vehicle 102. Further, the secondary arm 106 may comprise the plurality of linkages 138 that may be collectively configured to move in the one or more directions for receiving the at least one object 112 from the primary arm 104 and transporting the at least one object 112 to the conveyor line 108. In some embodiments, the one or more directions may correspond to one or more direction in the horizontal plane. In some embodiments, the conveyor line 108 may be configured to move the transported at least one object 112 from the source end to the destination end.

For example, the secondary arm 106 is configured to transport the at least one object 112 to a conveyor line 108. Further, the secondary arm 106 comprises plurality of linkages 138 and a plurality of parallel-axis joints 140. Further, the plurality of linkages 138 and the plurality of parallel-axis joints 140 are collectively configured to transport the at least one object 112 to a conveyor line 108 coupled with the third portion 118 of the base vehicle 102. Further, the conveyor line 108 is configured to move the at least one object 112 to an inlet dock of a facility.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
positioning a base vehicle in proximity to a cargo area or within the cargo area;
picking, via a primary arm coupled to a first portion of the base vehicle, at least one object from the cargo area, wherein the primary arm is configured to move in one or more directions;
receiving, via a secondary arm coupled to a second portion of the base vehicle, the at least one object from the primary arm; and
transporting, via the secondary arm, the at least one object received from the primary arm to a conveyor line positioned at a third portion of the base vehicle, wherein the secondary arm comprises a plurality of linkages that are collectively configured to move in one or more directions for receiving the at least one object from the primary arm and transporting the at least one object to the conveyor line.

2. The method of claim 1, wherein the base vehicle is further integrated with a plurality of wheels, wherein the plurality of wheels are configured to allow mobility of the base vehicle in one or more directions within the cargo area.

3. The method of claim 1, wherein the secondary arm is positioned with respect to the primary arm such that the primary arm is configured to deliver the at least one object to the secondary arm by moving in the one or more directions.

4. The method of claim 1, wherein the primary arm has a first end and a second end.

5. The method of claim 4, wherein the first end is integrated with a suction unit and the second end is coupled with the first portion of the base vehicle.

6. The method of claim 5, wherein the suction unit is configured to allow the primary arm to grip onto the at least one object and place onto the secondary arm.

7. The method of claim 1, wherein the second portion of the base vehicle comprises a platform, and wherein the secondary arm is coupled to the platform.

8. The method of claim 7, wherein:
the plurality of linkages collectively define a first end and a second end,
the secondary arm comprises a claw unit, and
the first end is coupled with the claw unit and the second end is coupled to a top surface of the platform.

9. The method of claim 8 further comprising moving, via the plurality of linkages, the claw unit from the primary arm at the first portion of the base vehicle to the third portion of the base vehicle for transporting the at least one object from the primary arm to the conveyor line.

10. The method of claim 1, wherein the first portion corresponds to a front portion of the base vehicle, the second portion corresponds to a middle portion of the base vehicle, and the third portion corresponds to a rear portion of the base vehicle.

11. The method of claim 10, wherein the middle portion of the base vehicle is at a predefined height relative to the front portion of the base vehicle and the middle portion of the base vehicle is in the same plane with the rear portion of the base vehicle.

12. A logistic system comprising:
a base vehicle;
a primary arm coupled to a first portion of the base vehicle, wherein the primary arm is configured to pick at least one object from a cargo area, wherein the primary arm is configured to move in one or more directions;
a secondary arm coupled to a second portion of the base vehicle; and
a conveyor line coupled to a third portion of the base vehicle,
wherein the secondary arm is configured to receive the at least one object from the primary arm and further transport the at least one object received from the primary arm to the conveyor line, and
wherein the secondary arm comprises a plurality of linkages that are collectively configured to move in one or more directions for receiving the at least one object from the primary arm and transporting the at least one object to the conveyor line.

13. The logistic system of claim 12, wherein the base vehicle is further integrated with a plurality of wheels, wherein the plurality of wheels are configured to allow mobility of the base vehicle in one or more directions within the cargo area.

14. The logistic system of claim 12, wherein the secondary arm is positioned with respect to the primary arm such that the primary arm is configured to deliver the at least one object to the secondary arm by moving in the one or more directions.

15. The logistic system of claim 12, wherein the secondary arm comprises a plurality of parallel-axis joints and is configured to move in horizontal directions and remain rigid in the vertical direction.
